# EUROPEAN PATENT SPECIFICATION

(11) **EP 1 728 696 B1**
(45) Date of publication and mention of the grant of the patent: **10.08.2011**
(21) Application number: 06011298.4
(22) Date of filing: 31.05.2006
(51) Int. Cl.: B60R 25/02

(54) **Steering device**
Lenkvorrichtung
Dispositif de direction

(30) Priority: 01.06.2005 JP 2005160893; 02.12.2005 JP 2005350026
(43) Date of publication of application: 06.12.2006
(73) Proprietor: NSK LTD., Shinagawa-ku, Tokyo 141-8560 (JP)
(72) Inventor: Yamada, Jun, Maebashi-shi Gunma (JP); Moriyama, Seiichi, Maebashi Gunma (JP)
(74) Representative: Grünecker, Kinkeldey, Stockmair & Schwanhäusser Anwaltssozietät

(56) References cited:
- DE-A1- 10 012 323
- GB-A- 2 298 837
- JP-A- 2002 316 652
- US-A1- 2005 092 044

## Description

### BACKGROUND OF THE INVENTION

The present disclosure relates to a steering device and, more particularly, to a steering device having a steering lock device for locking a steering wheel irrotationally to prevent theft of a vehicle after an ignition key is turned to a lock position and extracted from a keyhole.

In the steering device having the steering lock device, when the ignition key is turned to the lock position and extracted from the keyhole, the lock key protrudes toward the axis of a steering shaft. As a result, the leading end of the lock key comes into engagement with the keylock hole of the keylock collar fixed on the outer circumference of the steering shaft so that the steering shaft is fixed with respect to an outer column thereby to block the rotation of the steering shaft.

However, when the steering wheel is forcibly rotated with the steering shaft being locked, the lock key may be broken to lose the function of the steering lock device thereby to lose the function as the theft preventing device.

In case a high torque is applied, therefore, the keylock collar rotationally slides with respect to the steering shaft thereby to prevent the lock key from being broken. This steering device is disclosed in Japanese Patent No. 3, 453, 909 published as JP-A-8253105 (herein after referred as Patent Document 1).

The steering device of Patent Document 1 is constituted such that the inner circumference of the keylock collar to be fitted on the outer circumference of the steering shaft is made noncircular and such that the diameter of the inscribing circle of the inner circumference in the free state of the keylock collar is made smaller than that of the outer circumference in the free state of the steering shaft. As a result, the outer circumference of the steering shaft and the inner circumference of the keylock collar constitute frictional engagement portions, in which the outer circumference of the steering shaft and the inner circumference of the keylock collar elastically abut against each other.

In the steering device of Patent Document 1 having this simple constitution, the frictional force (or the sliding torque) to act between the inner circumference of the keylock collar and the outer circumference of the steering shaft is set to have a magnitude insufficient for breaking the lock key but sufficient for preventing the steering operation necessary for the run of the vehicle. Therefore, the steering device retains the function of the theft preventing device without losing the function of the steering lock device.

In recent years, there increases an electric steering lock device, in which the insertion/extraction of the lock key is performed by an actuator such as a motor. This electric steering lock device is required to have a constitution, in which the force necessary for inserting/extracting the lock key can be weak because the lock key is inserted/extracted by the drive force of the motor.

In the steering device of Patent Document 1, however, the outer circumference of the keylock collar is formed into a noncircular shape similar to that of the inner circumference and the thickness of the keylock column is thin, so that it is difficult to form numerous grooves or ridges in or on the outer circumference of the keylock collar and to apply such a keylock column to the electric steering lock device driven by the motor.

Further, the steering device of Patent Document 1 can establish a stable frictional force (or a sliding torque) in case the steering shaft is solid. In case, however, the steering shaft is made hollow for its weight reduction, its rigidity is so lowered that it is deformed, when the keylock collar is press-fitted on the steering shaft, to fail to establish the stable frictional force (or the sliding torque).

### SUMMARY OF THE INVENTION

The disclosure below describes a steering device which is suitably applied to an electric steering lock device and which has a steering lock device capable of forming numerous grooves or ridges for engaging with a lock key.

The disclosure also describes a steering device which is reduced in weight by using a hollow steering shaft and in which a keylock collar rotates with a stable sliding torque relative to the steering shaft.

An example implementation of the invention is described below. According to a first aspect of the invention, specifically, there is provided a steering device including: a steering shaft borne rotatably in a column and being capable of mounting a steering wheel on a body back side; a keylock collar of a hollow cylinder shape press-fitted on an outer circumference of the steering shaft and having a polygonal inner circumference formed of straight or curved sides; either at least one ridge or at least one bottomed groove formed at an outer circumference of the keylock collar, the ridge being protruded radially outward from the outer circumference of the keylock collar, the bottomed groove being recessed radially inward from the outer circumference of the keylock collar; and a lock key disposed in the column and having its leading end portion made engageable with the ridge or the bottomed groove by operating an ignition key.

In the steering device of the first aspect of the invention, according to a second aspect of the invention, the ridge or the bottomed groove is formed at the outer circumference of the keylock collar, which is spaced at the axial position from the inner circumference of the polygonal inner circumference.

In the steering device of the first aspect of the invention, according to a third aspect of the invention, the ridge or the bottomed groove is formed at the outer circumference of the keylock collar, which is at the same axial position as that the inner circumference of the polygonal inner circumference.

In the steering device of the third aspect of the invention, according to a forth aspect of the invention, a polygonal outer circumference is formed on the outer circumference of the keylock collar at the same axial position as that of the polygonal inner circumference and formed in a shape similar to that of the polygonal inner circumference, and the ridge or the bottomed groove is formed at the polygonal outer circumference.

In the steering device of the forth aspect of the invention, according to a fifth aspect of the invention, the ridge or the bottomed groove is formed at the circumferentially central positions of the sides of the polygonal outer circumference.

In the steering device of the forth aspect of the invention, according to a sixth aspect of the invention, the ridge or the bottomed groove is formed at the two ends of the sides of the polygonal outer circumference.

In the steering device of any of the first to sixth aspects of the invention, according to a seventh aspect of the invention, the ridge or the bottomed groove is formed in the same number as that of the sides of the polygonal inner circumference.

In the steering device of any of the first to sixth aspects, according to an eighth aspect, the ridge or the bottomed groove is formed in a number less than that of the sides of the polygonal inner circumference.

In the steering device of any of the first to sixth aspects, according to a ninth aspect, the ridge or the bottomed groove is formed in a number more than that of the sides of the polygonal inner circumference.

In the steering device of any of the first to sixth aspects, according to a tenth aspect, the ridge or the bottomed groove is formed single in number.

In the steering device of any of the first to sixth aspects of the invention, according to an eleventh aspect of the invention, the polygonal inner circumference of the keylock collar is chamfered at its one or two ends.

In the steering device of any of the first to sixth aspects of the invention, according to a twelfth aspect of the invention, either the steering shaft or the steering shaft and the keylock collar are hardened.

Various implementations may include one or more the following advantages. For example, in the steering device of the invention, at the circular outer circumference of a keylock collar, which is spaced at its axial position with respect to a polygonal inner circumference to be press-fitted on the outer circumference of a steering shaft, either ridges to bulge radially outward from the circular outer circumference or bottomed grooves recessed radially inward from that circular outer circumference, and the leading end portion of a lock key is engaged with the ridges or bottomed grooves. As a result, the numerous ridges or bottomed grooves can be formed at the circular outer circumference of the keylock collar, so that the steering device can be easily applied to an electric steering lock device, in which the insertion/retraction of the lock key is performed by an actuator such as a motor.

In the steering device of the invention, at the circular outer circumference of a keylock collar, which is at the same axial position as that of a polygonal inner circumference to be press-fitted on the outer circumference of a steering shaft, either ridges to bulge radially outward from the circular outer circumference or bottomed grooves recessed radially inward from that circular outer circumference, and the leading end portion of a lock key is engaged with the ridges or bottomed grooves. As a result, the numerous ridges or bottomed grooves can be formed at the circular outer circumference of the keylock collar, so that the steering device can be easily applied to an electric steering lock device, in which the insertion/retraction of the lock key is performed by an actuator such as a motor.

In the steering device of the invention, at the outer circumference of a keylock collar, which is at the same axial position as that of a polygonal inner circumference to be press-fitted on the outer circumference of a steering shaft, an outer circumference of a polygonal shape similar to that of a polygonal inner circumference, and either ridges to bulge radially outward from the polygonal outer circumference or bottomed grooves recessed radially inward from that outer circumference, and the leading end portion of a lock key is engaged with the ridges or bottomed grooves. As a result, the numerous ridges or bottomed grooves can be formed at the circular outer circumference of the keylock collar, so that the steering device can be easily applied to an electric steering lock device, in which the insertion/retraction of the lock key is performed by an actuator such as a motor.

Further, according to a thirteenth aspect, specifically, there is provided a steering device including: a steering shaft of a hollow cylinder shape borne rotatably in a column and being capable of mounting a steering wheel on a body back side; a keylock collar of a hollow cylinder shape having a noncircular inner circumference to be fitted on an outer circumference of the steering shaft and having a keylock hole; and a lock key disposed in the column and having its leading end portion made engageable with the keylock hole, wherein a diameter of an inscribing circle of the inner circumference in the free state of the keylock collar is smaller than that of the outer circumference in the free state of the steering shaft, and either the steering shaft or both the steering shaft and the keylock collar are hardened.

In the steering device of the thirteenth aspect, according to a fourteenth aspect, the steering shaft is induction-hardened on its outer circumference, on which the keylock collar is fitted.

In the steering device of the thirteenth aspect, according to a fifteenth aspect, the steering shaft has, after hardened, a Vickers hardness of HV300 to HV500.

In the steering device of the thirteenth aspect, according to a sixteenth aspect, the steering shaft has, after hardened, a Vickers hardness of HV300 to HV500; and the keylock collar has, after hardened, a Vickers hardness of HV400 or less.

In the steering device of the thirteenth aspect, according to a seventh aspect, the steering shaft has, after hardened, a Vickers hardness of HV300 to HV500 and a thickness of 2 mm to 3.5 mm.

In the steering device of the thirteenth aspect, according to an eighteenth aspect, the steering shaft has, after hardened, a Vickers hardness of HV300 to HV500 and a thickness of 2 mm to 3.5 mm; and the keylock collar has, after hardened, a Vickers hardness of HV400 or less and a thickness of 2 mm to 3 mm.

In the steering device of any one of the thirteenth to eighteenth aspect, according to a nineteenth aspect, the keylock collar is chamfered on the two ends of its inner circumference.

Various implementations may include one or more the following advantages. For example, in the steering device of the invention, the deformation of a steering shaft at the time of press-fitted in a keylock collar, by hardening either the hollow steering shaft or both the hollow steering shaft and the keylock collar. As a result, the steering device can be reduced in weight and stabilized in the sliding torque of the keylock collar relative to the steering shaft.

Other features and advantages may be apparent from the following detailed description, the accompanying drawings and the claims.

### BRIEF DESCRIPTION OF THE DRAWINGS

Fig. 1 is a side elevation showing the entirety of a steering device.
Fig. 2A is an enlarged longitudinal section of a fitting portion of a steering shaft and a keylock collar of Embodiment 1.
Fig. 2B is a perspective view of the single keylock collar of Fig. 2A.
Fig. 3A is a front elevation of the single keylock collar of Fig. 2B.
Fig. 3B is a left side view of Fig. 3A.
Fig. 3C is a section A - A of Fig. 3B.
Fig. 4A is a section B - B of Fig. 3A.
Fig. 4B is a section C - C of Fig. 3A.
Fig. 5A is an enlarged longitudinal section of a fitting portion of a steering shaft and a keylock collar of Embodiment 2.
Fig. 5B is a perspective view of the single keylock collar of Fig. 5A.
Fig. 6A is a front elevation of the single keylock collar of Fig. 5B.
Fig. 6B is a left side view of Fig. 6A.
Fig. 7A is a perspective view of the single keylock collar of the invention.
Fig. 7B is a front elevation of the single keylock collar of Fig. 7A.
Fig. 7C is a left side view of Fig. 7B.
Fig. 8 is an enlarged diagram showing the detailed shape of ridges formed on the outer circumference of the keylock collar of Embodiment 1 to Embodiment 3.
Fig. 9 is an enlarged diagram showing a modification of the ridges.
Fig. 10 is an enlarged diagram showing another modification of the ridges.
Fig. 11 is an enlarged diagram showing still another modification of the ridges.
Fig. 12 is an enlarged longitudinal section of a fitting portion of a steering shaft and a keylock collar of Embodiment 4.
Fig. 13A is an enlarged longitudinal section of a fitting portion of a steering shaft and a keylock collar.
Fig. 13B is a right side view of Fig. 13A.
Fig. 14A is a longitudinal section of a single keylock collar of Embodiment 4.
Fig. 14B is a right side view of Fig. 14A.
Fig. 14C is a top plan view of a keylock hole.
Fig. 14D is a section A - A of Fig. 14B.
Fig. 15A-15C show one example plotting the first to third measurement results of the steering device of the steering device.
Fig. 15D-15F show one example plotting the fourth to sixth measurement results of the steering device of the steering device.
Fig. 16A-16C show another example plotting the first to third measurement results of the steering device of the steering device.
Fig. 16D-16F show that another example plotting the fourth to sixth measurement results of the steering device of the steering device.

### DETAILED DESCRIPTION OF THE PREFERRED EMBODIMENTS

Embodiment 1 to Embodiment 3 of the invention are described in the following with reference to the accompanying drawings.

### [Embodiment 1]

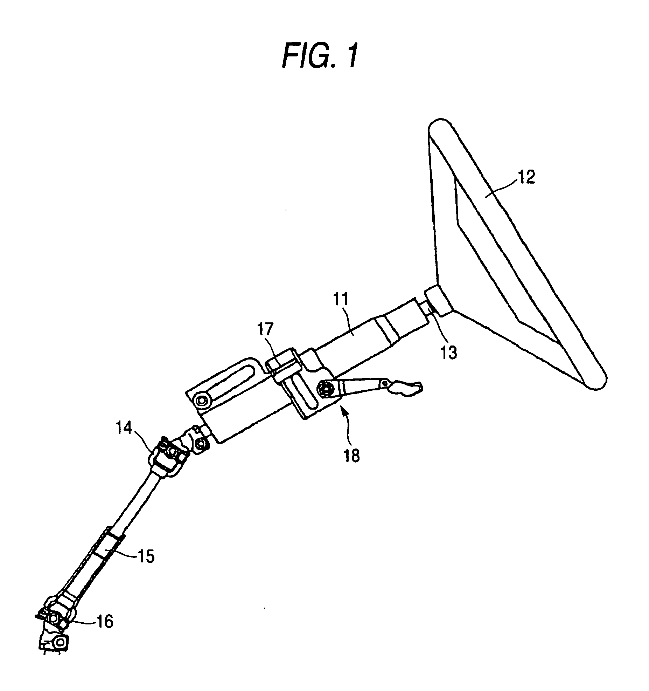

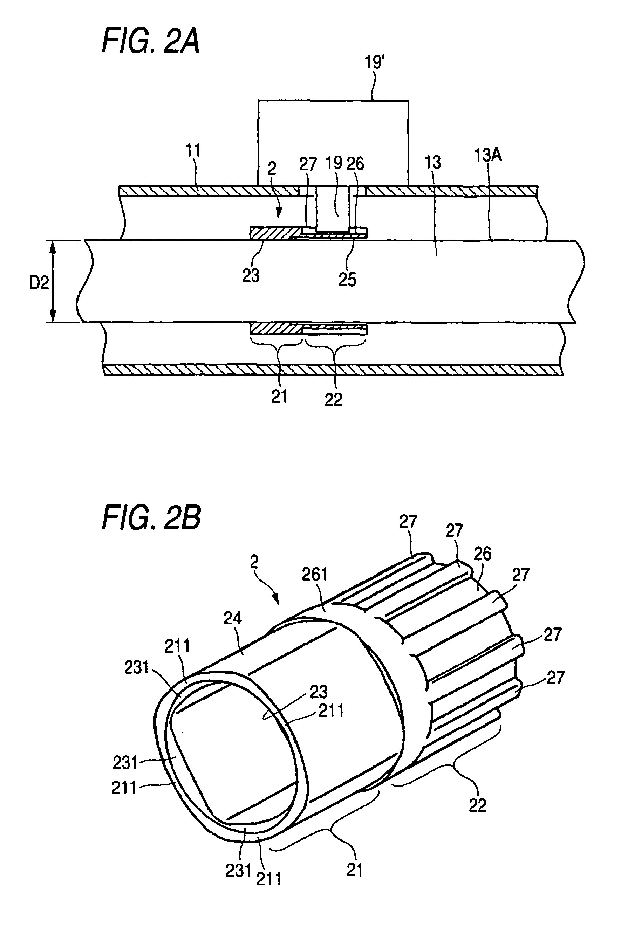

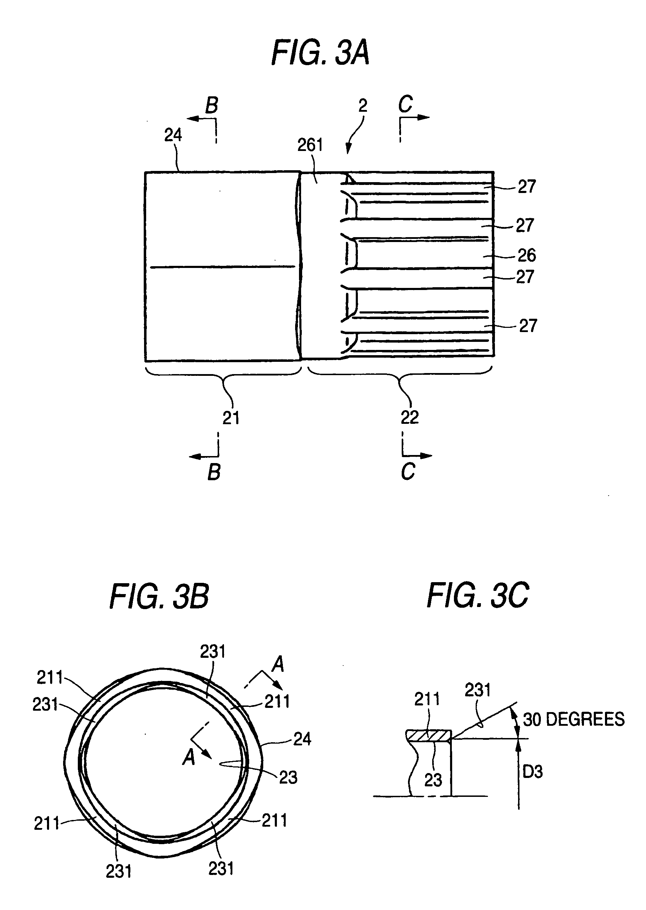

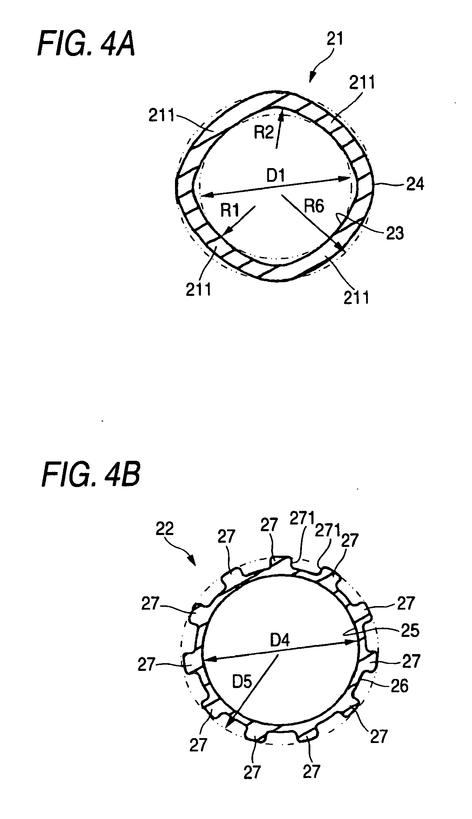

Fig. 1 is a side elevation showing the entirety of a steering device. Fig. 2A is an enlarged longitudinal section of a fitting portion of a steering shaft and a keylock collar of Embodiment 1, and Fig. 2B is a perspective view of the single keylock collar of Fig. 2A. Fig. 3A is a front elevation of the single keylock collar of Fig. 2B; Fig. 3B is a left side view of Fig. 3A; and Fig. 3C is a section A - A of Fig. 3B. Fig. 4A is a section B - B of Fig. 3A, and Fig. 4B is a section C - C of Fig. 3A.

In a column 11, as shown in Fig. 1, there is rotatably borne a steering shaft 13, which fits a steering wheel 12 on the back side of a vehicle body. An extendible intermediate shaft 15 is connected to the body front side of the steering shaft 13 through an upper universal joint 14.

To the lower end of that intermediate shaft 15, there is connected through a lower universal joint 16 the not-shown rack-and-pinion steering gear, to which the wheels are connected through a tie rod. As a result, the wheels can be steered when the steering wheel 12 is manually operated.

To the axially substantially intermediate positions of the column 11, there are mounted an upper bracket 17, which is fixed on the vehicle body (although not shown), and a tilt adjusting mechanism 18 for adjusting the tilt of the column 11 with respect to the upper bracket 17. As shown in Fig. 2, a keylock collar 2 is press-fitted and fixed on the outer circumference 13A of the steering shaft 13 of a hollow cylinder shape.

In Embodiment 1, as shown in Fig. 2A to Fig. 4B, the keylock collar 2 is entirely formed into a hollow cylinder shape and either made of an elastic metal material for a carbon steel pipe of a mechanical structure or cold-forged. Moreover, the keylock collar 2 is formed of a square cylinder portion 21 at its half on the body front side (on the left side of Fig. 2A) and a cylindrical portion 22 on the body back side (on the right side of Fig. 2A).

As shown in Fig. 3B and Fig. 4A, the square cylinder portion 21 is constituted of four curved sides 211, 211, 211 and 211. Specifically, an inner circumference 23 of the four sides 211, 211, 211 and 211 is formed to have a larger radius of curvature R1 arcuately bulging radially outward, and these sides 211, 211, 211 and 211 are smoothly merged into each other at their two circumferential ends by a smaller radius of curvature R2 arcuately bulging radially outward.

Moreover, the outer circumference 24 of the fourth sides 211, 211, 211 and 211 is formed in a form similar to that of the inner circumference 23 so that the four sides 211, 211, 211 and 211 have a constant thickness.

The diameter D1 (Fig. 4A) of the inner circumference 23 of the square cylinder portion 21 is made smaller in the free state of the square cylinder portion 21 than the diameter D2 (the outer diameter) of the outer circumference 13A in the free state of the steering shaft 13. The radius of curvature R1 is larger than the radius of the steering shaft 13.

As a result, the outer circumference 13A of the steering shaft 13 and the circumferential intermediate portions of the inner circumference 23 of the individual sides 211, 211, 211 and 211 of the keylock collar 2 constitute frictional engagement portions to elastically abut against each other. This frictional force (the sliding torque) of the frictional engagement portions is obtained by the elastic deformations of the sides 211, 211, 211 and 211 of the square cylinder portion 21.

Fig. 3C is a section A - A of Fig. 3B, and presents the open side end portion of the side 211 of the square cylinder portion 21 in section. In the inner circumference 23 of the square cylinder portion 21, a chamfer 231 of 30 degrees is formed on the left end of Fig. 3A. This chamfer 231 has a diameter D3 set larger than the diameter D2 (the outer diameter) of the outer circumference 13A in the free state of the steering shaft 13. The angle of the chamfer 231 should not be limited to 30 degrees but can take various angles of 15 degrees, 45 degrees and 60 degrees or can be rounded.

When the keylock collar 2 is press-fitted in the steering shaft 13, the inner circumference 23 of the square cylinder portion 21 is smoothly inserted onto the outer circumference 13A of the steering shaft 13. It is, therefore, possible to avoid the galling between the outer circumference 13A of the steering shaft 13 and the inner circumference 23 of the square cylinder portion 21.

As shown in Fig. 2A and Fig. 4B, the cylindrical portion 22 is constituted to have a circular inner circumference 25 and a circular outer circumference 26. The inner circumference 25 has a diameter D4 set larger in the free state of the cylindrical portion 22 than the diameter D2 (the outer diameter) of the outer circumference 13A in the free state of the steering shaft 13. With the keylock collar 2 being press-fitted in the steering shaft 13, therefore, a clearance is formed between the outer circumference 13A of the steering shaft 13 and the inner circumference 25 of the outer circumference 13A.

On the circular outer circumference 26 of the cylindrical portion 22, there are formed eleven ridges 27, which bulge radially outward and are angularly equally spaced from each other. The number of the ridges should not be limited to eleven but may be any if one or more. These ridges 27 are formed to have right ends extending to the right end of the cylindrical portion 22 (the right end of Fig. 2A and Fig. 3A).

On the outer circumference 26 of the cylindrical portion 22 and at the axial joint portion between the cylindrical portion 22 and the square cylinder portion 21, there is formed a diametrically larger outer circumference 261, which has a diameter equal to that D5 (Fig. 4B) of the circumscribing circle of the ridges 27, thereby to improve the rigidity of the ridges 27. The diameter D5 of the circumscribing circle of the ridges 27 is made slightly smaller than the diameter D6 (Fig. 4A) of the circumscribing circle of the square cylinder portion 21.

A steering lock device 19' is attached to the column 11, and a lock key 19 of the steering lock device 19' moves in a radial direction of the steering shaft 13 by the insertion or pullout of the not-shown ignition key. When the not-shown ignition key is turned to the lock position and pulled out of the keyhole, although the lock key 19 (Fig. 2A) protrudes toward the axis of the steering shaft 13. As a result, the leading end of the lock key 19 comes into engagement between the side faces 271 and 271 of the adjoining ridges 27 and 27 of the keylock collar 2 so that the steering shaft 13 is fixed with respect to the column 11 thereby to block the rotation of the steering shaft 13.

In Embodiment 1, the ridges 27 are formed on the circular outer circumference 26 of the cylindrical portion 22 spaced at its axial position from the square cylinder portion 21 so that the numerous ridges 27 can be formed on the outer circumference 26 of the keylock collar 2. As a result, Embodiment 1 can be easily applied to an electric steering lock device, in which the lock key 19 is inserted/extracted by an actuator such as a motor. Of course, Embodiment 1 can also be applied to the steering lock device in which the lock key and the ignition key are mechanically coupled.

In Embodiment 1 of the invention, the square cylinder portion 21 is formed on the body front side, and the cylindrical portion 22 is formed on the body back side. However, the square cylinder portion 21 may be formed on the body back side, and the cylindrical portion 22 may be formed on the body front side. Moreover, the clearance is formed between the outer circumference 13A of the steering shaft 13 and the inner circumference 25 of the cylindrical portion 22. However, the inner circumference 25 of the cylindrical portion 22 may be press-fitted in the outer circumference 13A of the steering shaft 13.

Moreover, the outer circumference 24 of the square cylinder portion 21 is formed into a square shape similar to that of the inner circumference 23. However, the outer circumference 24 may be formed into a circular shape and the inner circumference 25 may be formed into a polygonal shape such as a square shape, thereby to vary the thickness of the sides 211 with the circumferential position. The square cylinder portion 21 should not be limited to the square shape but may be a polygonal shape such as a triangular shape or a noncircular shape.

### [Embodiment 2]

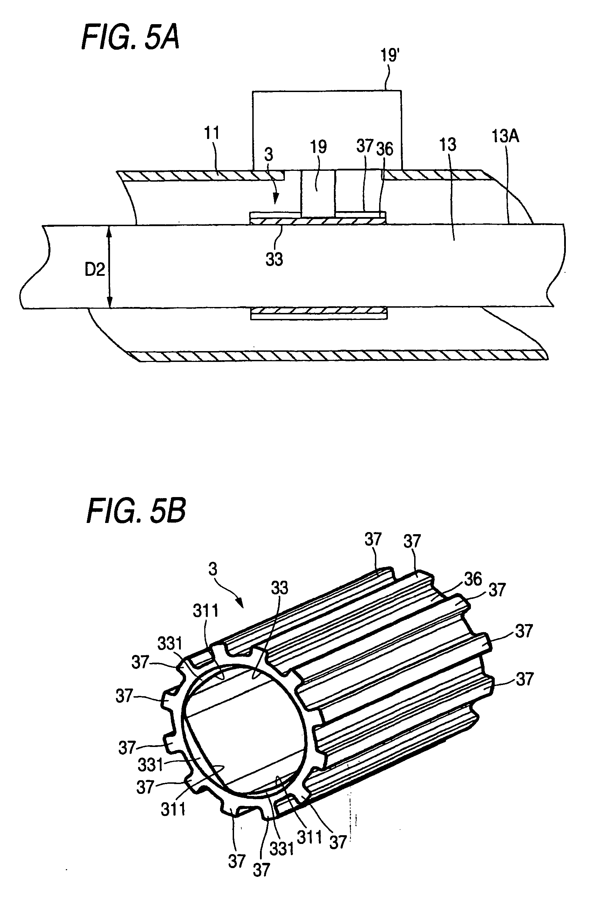

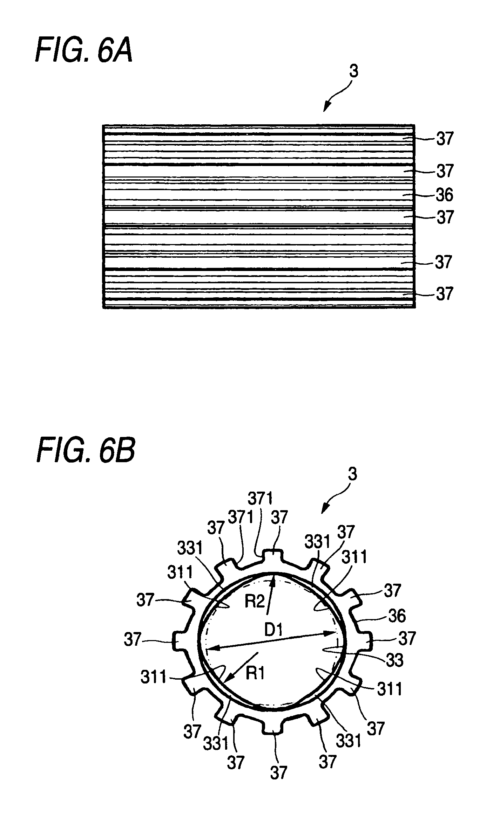

Embodiment 2 is described in the following. Fig. 5A is an enlarged longitudinal section of a fitting portion of a steering shaft and a keylock collar of Embodiment 2, and Fig. 5B is a perspective view of the single keylock collar of Fig. 5A. Fig. 6A is a front elevation of the single keylock collar of Fig. 5B, and Fig. 6B is a left side view of Fig. 6A. The following description is made exclusively on constitutional portions and actions different from those of Embodiment 1 while omitting the overlapped portions. Moreover, the description is made by designating the parts identical to those of Embodiment 1 by the common reference numerals.

In Embodiment 2, the square cylinder portion 21 to be press-fitted on the steering shaft 13 and the cylindrical portion 22 to have the ridges 27 are formed at the identical axial positions. As shown in Fig. 5A, the keylock collar 3 is press-fitted and fixed on the outer circumference 13A of the steering shaft 13 of the hollow cylinder shape.

As shown in Fig. 5A to 6B, an inner circumference 33 of the keylock collar 3 are formed into a curved square shape. Specifically, the four sides 311, 311, 311 and 311 of the inner circumference 33 are formed to have a larger radius of curvature R1 arcuately bulging radially outward, and these sides 311, 311, 311 and 311 are smoothly merged into each other at their two circumferential ends by the smaller radius of curvature R2 arcuately bulging radially outward.

Moreover, the outer circumference 36 of the keylock collar 3 is formed in a circular shape so that the thickness of the keylock collar 3 varies with the circumferential positions. The diameter D1 of the inscribing circle of the inner circumference 33 of the keylock collar 3 is made smaller in the free state of the keylock collar 3 than the diameter D2 (the outer diameter) of the outer circumference 13A in the free state of the steering shaft 13. The radius of curvature R1 is larger than the radius of the steering shaft 13.

As a result, the outer circumference 13A of the steering shaft 13 and the inner circumference 33 of the keylock collar 3 constitute frictional engagement portions to elastically abut against each other.

In the inner circumference 33 of the keylock collar 3, chamfers 331 of 30 degrees are formed on the two ends of Fig. 6. These chamfers 231 have a diameter (although not shown) set larger than the diameter D2 (the outer diameter) of the outer circumference 13A in the free state of the steering shaft 13. The angle of the chamfers 231 should not be limited to 30 degrees but can take various angles of 15 degrees, 45 degrees and 60 degrees or can be rounded.

When the keylock collar 3 is press-fitted in the steering shaft 13, the inner circumference 33 of the keylock collar 3 is smoothly inserted onto the outer circumference 13A of the steering shaft 13. It is, therefore, possible to avoid the galling between the outer circumference 13A of the steering shaft 13 and the inner circumference 33 of the keylock collar 3.

On the outer circumference 36 of the keylock collar 3, there are formed twelve ridges 37, which bulge radially outward and are angularly equally spaced from each other. These ridges 37 are formed at the positions of the outer circumference 36 which correspond to the circumferential positions of individual sides 311, 331, 331, 331 of the inner circumference 33 and also correspond to the crests of the individual sides 331, 331, 331, 331. These ridges 37 are formed to have two right and left ends (the two right and left ends of Fig. 6A) extending to the two right and left ends of the keylock collar 3.

When the not-shown ignition key is turned to the lock position and pulled out of the keyhole, although the lock key 19 (Fig. 5A) protrudes toward the axis of the steering shaft 13. As a result, the leading end of the lock key 19 comes into engagement between the side faces 371 and 371 of the adjoining ridges 37 and 37 of the keylock collar 3 so that the steering shaft 13 is fixed with respect to the column 11 thereby to block the rotation of the steering shaft 13.

In Embodiment 2, the ridges 37 are formed on the circular outer circumference 36 formed at the same axial positions as that of the square inner circumference 33 so that the numerous ridges 37 can be formed on the outer circumference 36 of the keylock collar 3. As a result, Embodiment 2 can be easily applied to an electric steering lock device, in which the lock key 19 is inserted/extracted by the actuator such as a motor. Of course, Embodiment 1 can also be applied to the steering lock device in which the lock key and the ignition key are mechanically coupled.

### [Embodiment 3]

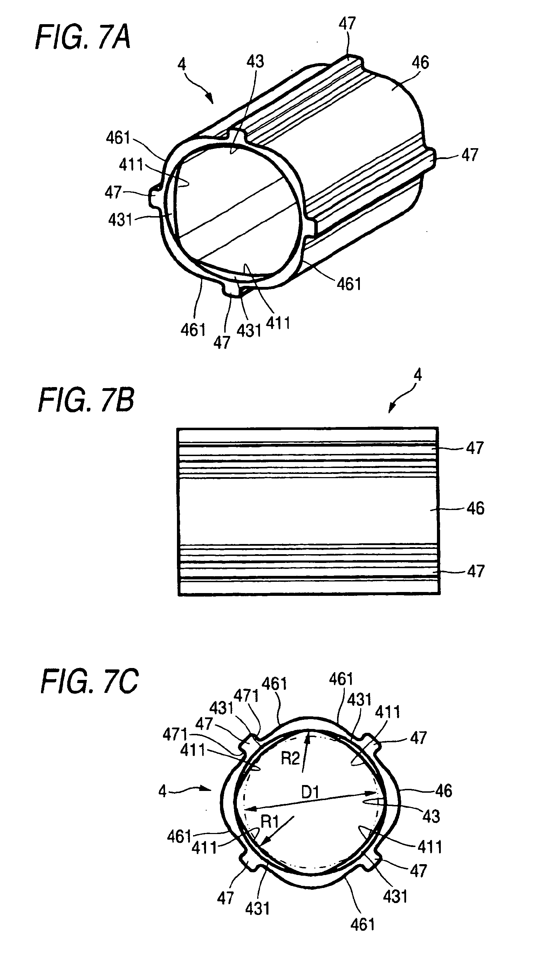

the invention is described in the following. Fig. 7A is a perspective view of the single keylock collar of the invention; Fig. 7B is a front elevation of the single keylock collar of Fig. 7A; and Fig. 7C is a left side view of Fig. 7B. The following description is made exclusively on constitutional portions and actions different from those of Embodiment 1 and Embodiment 2 while omitting the overlapped portions. Moreover, the description is made by designating the parts identical to those of Embodiment 1 and Embodiment 2 by the common reference numerals.

In Embodiment 3, ridges are formed on the outer circumference of the keylock collar, which has both its inner and outer circumferences formed into squares. As shown in Fig. 7, an inner circumference 43 of the keylock collar 4 is formed into a curved square shape. Specifically, the four sides 411, 411, 411 and 411 of the inner circumference 43 are formed to have a larger radius of curvature R1 arcuately bulging radially outward, and these sides 411, 411, 411 and 411 are smoothly merged into each other at their two circumferential ends by the smaller radius of curvature R2 arcuately bulging radially outward.

Moreover, the outer circumference 46 of the keylock collar 4 is formed in a square shape similar to that of the inner circumference 43 so that the keylock collar 4 have a constant thickness. The diameter D1 of the inscribing circle of the inner circumference 43 of the keylock collar 4 is made smaller in the free state of the keylock collar 4 than the diameter (the outer diameter) of the outer circumference in the free state of the not-shown steering shaft. The radius of curvature R1 is larger than the radius of the steering shaft 13.

As a result, the outer circumference of the steering shaft and the inner circumference 43 of the keylock collar 4 constitute frictional engagement portions to elastically abut against each other.

In the inner circumference 43 of the keylock collar 4, chamfers 431 of 30 degrees are formed on the two ends of Fig. 7B. These chamfers 431 have a diameter (although not shown) set larger than the diameter (the outer diameter) of the outer circumference in the free state of the steering shaft. The angle of the chamfers 431 should not be limited to 30 degrees but can take various angles of 15 degrees, 45 degrees and 60 degrees or can be rounded.

When the keylock collar 4 is press-fitted in the steering shaft, the inner circumference 43 of the keylock collar 4 is smoothly inserted onto the outer circumference of the steering shaft. It is, therefore, possible to avoid the galling between the outer circumference of the steering shaft and the inner circumference 43 of the keylock collar 4.

On the outer circumference 46 of the keylock collar 4 and at the circumferentially central positions of individual sides 461, 461, 461 and 461 of the outer circumference 46, there are formed four ridges 47, which bulge radially outward and are angularly equally spaced from each other. These ridges 47 are formed to have two right and left ends (the two right and left ends of Fig. 7B) extending to the two right and left ends of the keylock collar 4.

When the not-shown ignition key is turned to the lock position and pulled out of the keyhole, although not shown, the lock key protrudes toward the axis of the steering shaft. As a result, the leading end of the lock key comes into engagement between the side faces 471 of the ridges 47 of the keylock collar 4 so that the steering shaft is fixed with respect to the column thereby to block the rotation of the steering shaft.

In the invention, the ridges 47 are formed on the square outer circumference 46 formed at the same axial positions as that of the square inner circumference 43 so that the numerous ridges 47 can be formed on the outer circumference 46 of the keylock collar 4. As a result, Embodiment 3 can be easily applied to an electric steering lock device, in which the lock key is inserted/extracted by the actuator such as a motor. Of course, Embodiment 1 can also be applied to the steering lock device in which the lock key and the ignition key are mechanically coupled.

In the invention, each ridge 47 is formed at the circumferentially central portion of each of the sides 461, 461, 461 and 461 of the outer circumference 46, but two or more ridges may be individually arranged. Further, the ridges 47 may also be formed at the crests of the individual sides 461, 461, 461 and 461.

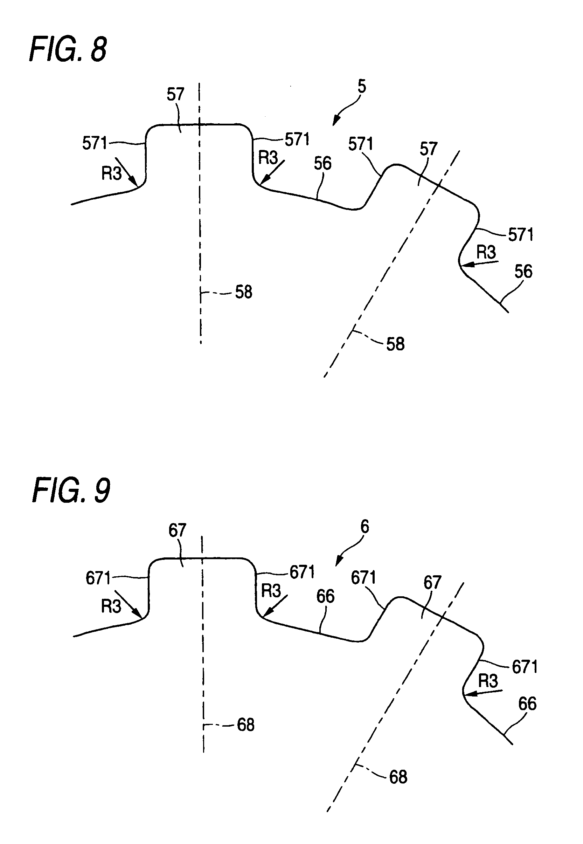

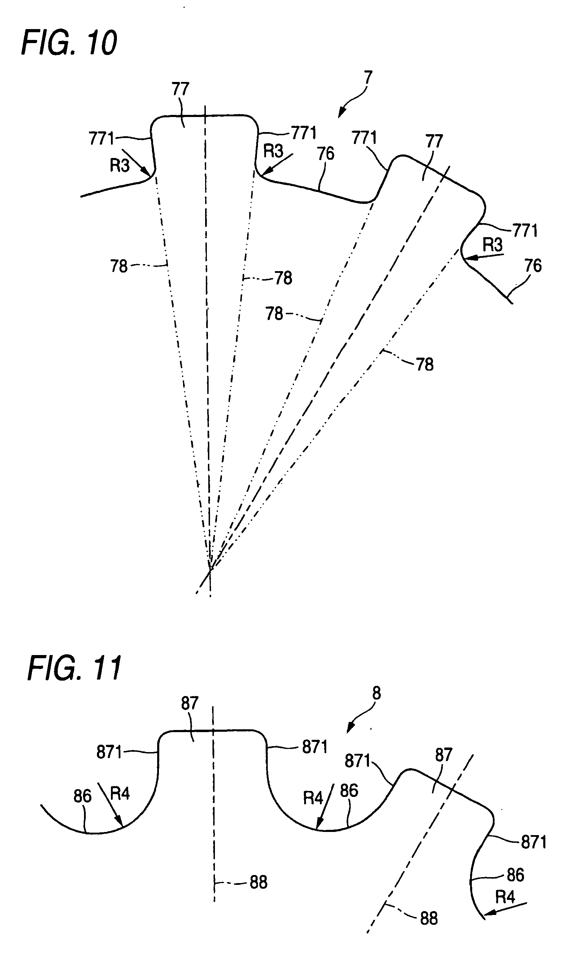

Fig. 8 is an enlarged diagram showing the detailed shape of ridges formed on the outer circumference of the keylock collar of Embodiment 1 to Embodiment 3. Fig. 9 is an enlarged diagram showing a modification of the ridges. Fig. 10 is an enlarged diagram showing another modification of the ridges. Fig. 11 is an enlarged diagram showing still another modification of the ridges. The following description is made exclusively on constitutional portions and actions different from those of Embodiment 1 to Embodiment 3 while omitting the overlapped portions. Moreover, the description is made by designating the parts identical to those of Embodiment 1 to Embodiment 3 by the common reference numerals.

The side faces 571 and 571 of ridges 57, as shown in Fig. 8, are formed in parallel with the center axis of a keylock collar 5 and in parallel with planes 58 extending through the axis of the keylock collar 5. Moreover, the portions between the circular outer circumference 56 and the side faces 571 and 571 of the keylock collar 5 are smoothly merged through arcs of a radius R3.

The side faces 671 and 671 of ridges 67 of the modification shown in Fig. 9 are formed in parallel with the center axis of a keylock collar 6 and in parallel with planes 68 extending through the axis of the keylock collar 6. The outer circumference 66 of the keylock collar 5 is formed in a flat shape unlike the example of Fig. 8. Moreover, the portions between the outer circumference 66, as formed into the flat face, and the side faces 671 and 671 of the keylock collar 6 are smoothly merged through arcs of the radius R3.

The side faces 771 and 771 of ridges 77, as shown in Fig. 10, are formed on radial planes 78 and 78 extending through the axis of the keylock collar 907. Moreover, the portions between the circular outer circumference 76 and the side faces 771 and 771 of the keylock collar 907 are smoothly merged through arcs of the radius R3. Herein, the outer circumference 76 may be formed into flat face.

The side faces 871 and 871 of ridges 87, as shown in Fig. 8, are formed in parallel with the center axis of a keylock collar 8 and in parallel with planes 88 extending through the axis of the keylock collar 8. Moreover, the adjoining side faces 871 and 871 are smoothly merged through a single arcuate outer circumference of a radius R4.

In Embodiment 1 to Embodiment 3, the ridges 27, 37 and 47 bulging radially outward are formed on the outer circumference 26, 36 or 46. This outer circumference may be recessed radially inward to have a bottomed groove so that the leading end of the lock key 19 may engage with that bottomed groove to block the rotation of the steering shaft 13.

In Embodiment 1 to Embodiment 3, moreover, the inner circumference 23, 33 or 43 is formed into the square shape but may be a polygonal inner circumference having an arbitrary number of polygons. In Embodiment 1 to Embodiment 3 of the invention, still moreover, the individual sides of the inner circumference 23, 33 or 43 are formed of the curves but may be formed of straight lines.

In Embodiment 1 to Embodiment 3, furthermore, the ridges 27, 37 or 47 of the outer circumference are formed at the angularly equal spacing on the outer circumference. However, the ridges may be formed at angularly unequal spacings and may be odd, even or single.

In the foregoing embodiments, on the other hand, the steering shaft may be hollow or solid. Further, as mentioned in Embodiment 4 below, the steering shaft may be subjected to a treatment such as a hardening if its surface hardness is raised to improve the wear resistanc. Moreover, as mentioned in Embodiment 4 below, the keylock collar may be subjected to by a treatment such as a hardening if its hardness and stiffness are raised to improve the wear resistance.

### (Embodiment 4)

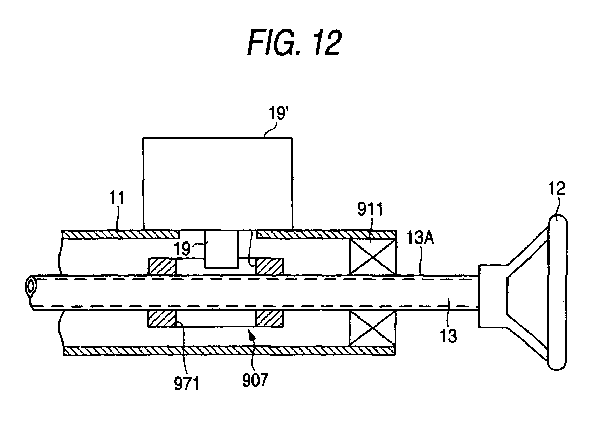

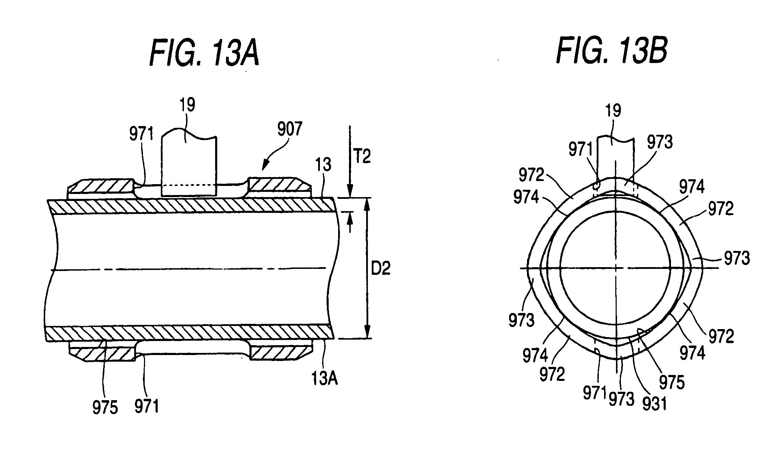

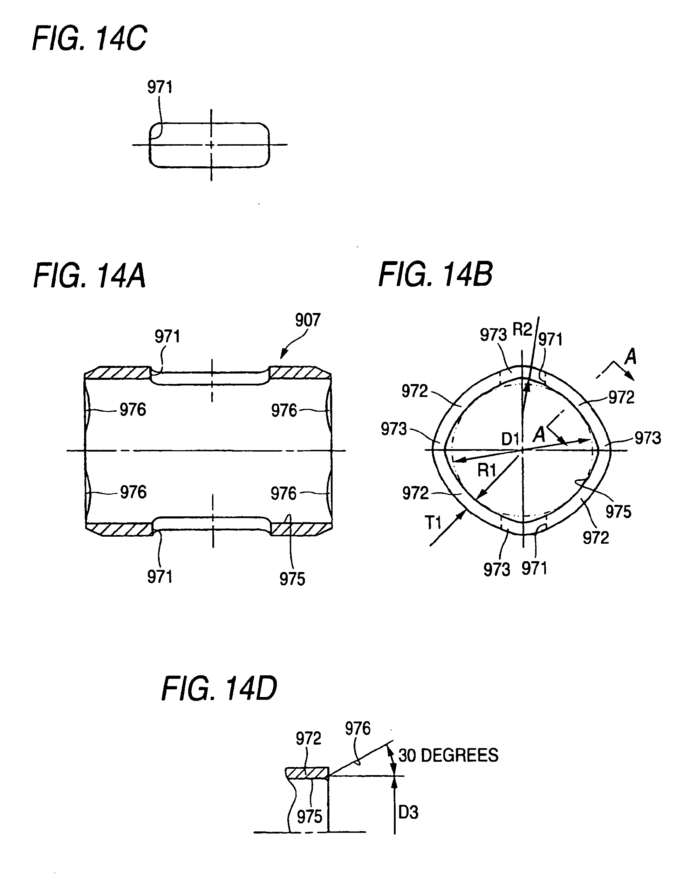

Embodiment 4 is described in the following with reference to the accompanying drawings. Fig. 12 is an enlarged longitudinal section of a fitting portion of a steering shaft and a keylock collar of Embodiment 4. Fig. 13A presents an enlarged longitudinal section of a fitting portion of a steering shaft and a keylock collar, and Fig. 13B is a right side view of Fig. 13A. Fig. 14A is a longitudinal section of the single keylock collar of Embodiment 4, Fig. 14B is a right side view of fig. 14A, Fig. 14C is a top plan view of a keylock hole, and Fig. 14D is a section A - A of Fig. 14B.
steering shaft 13steering wheel 12steering shaft 13steering wheel 12column 11.

In Embodiment 4, as shown in Fig. 12, the steering shaft 13 of the hollow cylinder shape is rotatably borne at its body back side in the inner circumference of the column 11 by means of a bearing 911. A keylock collar 907 is press-fitted and fixed on the outer circumference 13A of the steering shaft 13.

A steering lock device 19' is attached to the column 11, and a lock key 19 of the steering lock device 19' moves in a radial direction of the steering shaft 13 by the insertion or pullout of the not-shown ignition key. The keylock collar 907 has a keylock hole 971 formed therein. When the not-shown ignition key is turned to the lock position and pulled out of the keyhole, although not shown, a lock key 19 protrudes toward the axis of the steering shaft 13. As a result, the leading end of the lock key 19 comes into engagement into the keylock hole 971 of the keylock collar 907 so that the steering shaft 13 is fixed with respect to the column 11 thereby to block the rotation of the steering shaft 13.

In Embodiment 4, as shown in Fig. 13 and Fig. 14, the keylock collar 907 is formed into a square cylinder shape of an elastic metal material such as a carbon steel pipe or the like for a mechanical structure. Specifically, the keylock collar 907 is formed to have four side portions 972, the individual outer circumference side faces of which are formed into arcuately bulging faces. These side portions 972 are smoothly merged at their two circumferential end portions with each other through four corner portions 973 which have their outer circumferential side faces arcuately bulged with a small radius of curvature R2.

Moreover, the keylock hole 971 or an axially long hole is formed at the axially (transversely of Fig. 13A) intermediate positions of the two opposed corner portions 973 and 973. The inner circumference 975 of the keylock collar 907 is formed into the noncircular shape by thus forming the entirety into the square cylinder shape. The inscribing circle of the inner circumference 975 of the keylock collar 907 has a smaller diameter D1 in the free state of the keylock collar 907 than the diameter D2 (the outer diameter) of the outer circumference 13A in the free state of the steering shaft 13. The radius of curvature R1 is larger than the radius of the steering shaft 13.

With this constitution, the outer circumference 13A of the steering shaft 13 and the circumferentially intermediate portion of the inner circumference 975 of each side portion 972 of the keylock collar 907 constitute a frictional engagement portion 974, in which they elastically against each other.

This keylock collar 907 is hardened by a tempering treatment to have a Vickers hardness of HV400 or less. Moreover, the keylock collar 907 has a thickness T1 set at 2 mm to 3 mm.

In this mode of embodiment, the steering shaft 13 is reduced in weight by forming it into the hollow cylinder shape of an elastic metal material of the carbon steel pipe or the like for the mechanical structure, and has a weight T2 of 2 mm to 3.5 mm, as shown in Fig. 13A. The steering shaft 13 is induction-hardened at the outer circumference 13A of the portion, on which the inner circumference 975 of the keylock collar 907 is press-fitted, so that it has a Vickers hardness of HV300 to HV500.

Fig. 14D is a section A - A of Fig. 14B, and presents an open side end portion of the side portion 972 of the keylock collar 907 in section. The inner circumference 975 of the keylock collar 907 is chamfered, as indicated at 976, of 30 degrees on the two right and left ends of Fig. 14A. This chamfered portion 976 has a diameter D3 set larger than that D2 (or the outer diameter) of the outer circumference 13A in the free state of the steering shaft 13.

As a result, the chamfer 976 is formed each of the two ends of the four side portions 972. When the keylock collar 907 is press-fitted in the steering shaft 13, the inner circumference 975 of the keylock collar 907 is smoothly inserted onto the outer circumference 13A of the steering shaft 13. It is, therefore, possible to avoid the galling between the outer circumference 13A of the steering shaft 13 and the inner circumference 975 of the keylock collar 907.

In the case of the steering device, as constituted of the aforementioned keylock collar 907 and steering shaft 13, the frictional force (or the sliding torque) of the each of the aforementioned frictional engagement portions 974 is acquired from the fact that the individual side portions 972 of the keylock collar 907 are elastically deformed diametrically outward.

In Embodiment 4 of the invention, the steering shaft 13 is hardened so that its deformation is reduced when the keylock collar 907 is press-fitted on the steering shaft 13. It is sufficient to harden only the steering shaft 13. If the keylock collar 907 is also hardened, the deformation is preferably reduced on the side of the keylock collar 907.

As a result, the inner circumference 975 of the keylock collar 907 rotates in the stable sliding torque with respect to the outer circumference 13A of the steering shaft 13. If the diameter D1 of the inscribing circle of the inner circumference 975 in the free state of the keylock collar 907 is made smaller than that D2 of the outer circumference 13A of the steering shaft 13, the difference, if any, in the sizing precision will not influence the magnitude of the frictional force seriously.

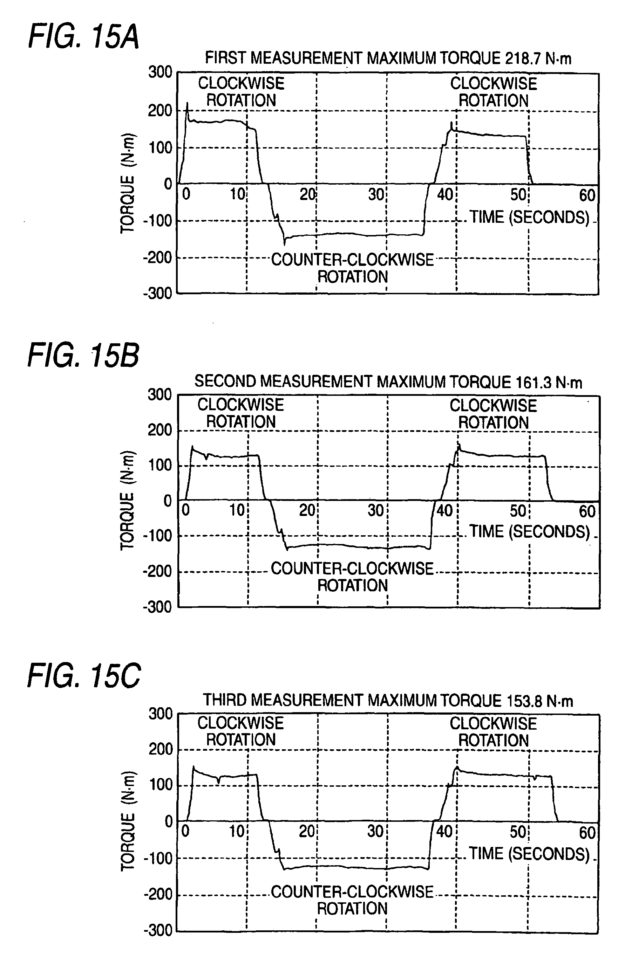

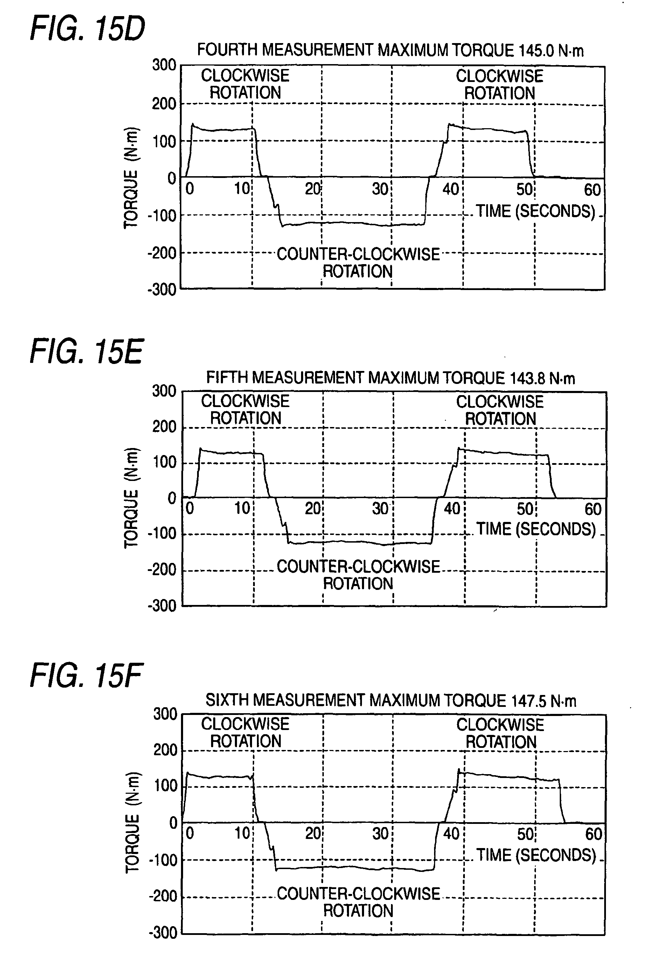

Here are described the experimental results, in which the sliding torques are measured by using the keylock collar 907 and the steering shaft 13 thus far described. Fig. 15A-15C is one example plotting the first to third measurement results of the steering device. Fig. 15D-15F is one example plotting the fourth to sixth measurement results of the steering device of the steering device.

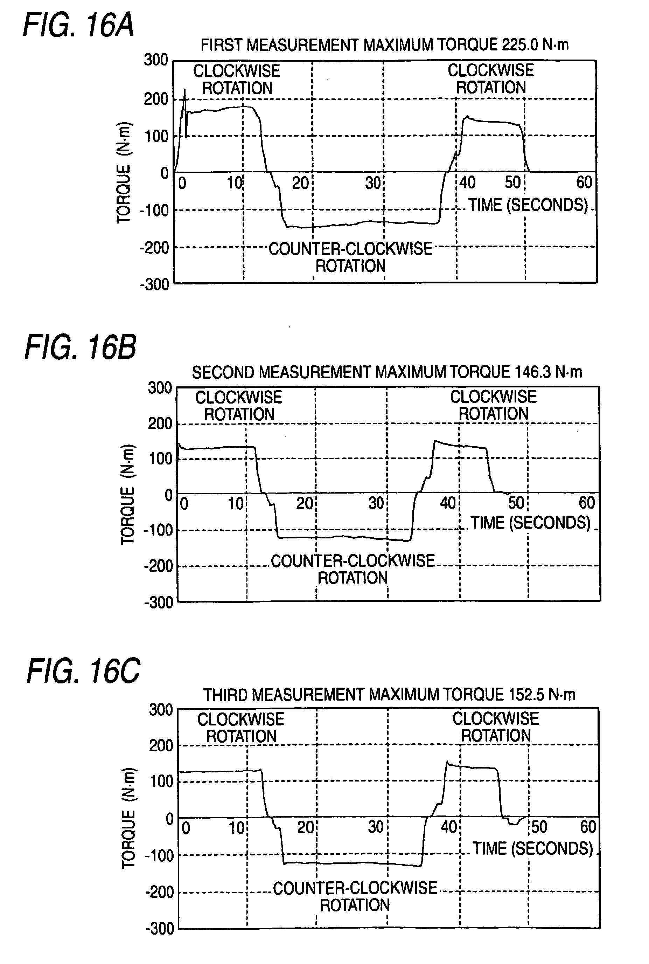

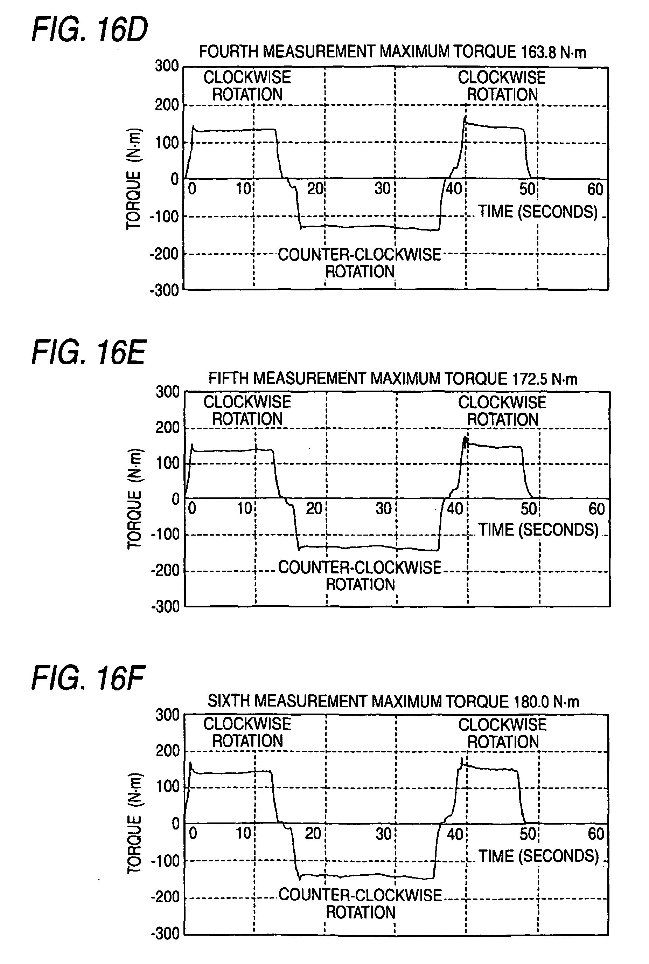

Fig. 16A-16C is another example plotting the first to third measurement results of the steering device of the steering device of the invention. Fig. 16D-16F is that another example plotting the fourth to sixth measurement results of the steering device of the steering device of the invention.

The steering shaft 13 used in the experiments had the diameter D2 of 26.5 mm of the outer circumference 13A in the free state, the Vickers hardness of HV400 to HV500 after induction-hardened, and the thickness T2 of 3 mm. The keylock collar 907 had the larger radius of curvature R1 of 19.5 mm, the smaller radius of curvature R2 of 4 mm, the thickness T1 of 2.6 mm, and the diameter D3 of the chamfered portion 976 of 27.7 mm.

In the experiments of Fig. 15A-15C and Fig. 15D-15F, and Fig. 16A-16C and Fig. 16D-16F, the measurements are performed under different conditions. In the experiments of Fig. 15A-15C and Fig. 15D-15F, the keylock collar 907 had a Vickers hardness of HV280, after hardened, and an interference of 0.746 mm of the keylock collar 907 relative to the outer circumference 13A of the steering shaft 13. In the experiments of Fig. 16A-16C and Fig. 16D-16F, the keylock collar 907 had a Vickers hardness of HV320, after hardened, and an interference of 0.365 mm of the keylock collar 907 relative to the outer circumference 13A of the steering shaft 13.

In the experimental method, the leading end of the lock key 19 is brought into engagement with the keylock hole 971 of the keylock collar 907, and the force in the turning direction is applied to the steering shaft 13 while the keylock collar 907 being fixed relative to the column 1. Moreover, the torque (or the sliding torque) necessary for turning the outer circumference 13A of the steering shaft 13 relative to the inner circumference 975 of the keylock collar 907 is measured.

The measuring works of the sliding torque is performed for six cycles each including the following strokes: [to turn the steering shaft 13 clockwise by 180 degrees] → [to turn the steering shaft 13 counter-clockwise by 180 degrees] - [to turn the steering shaft 13 clockwise by 180 degrees].

This cycle is performed totally by the six cycles for each specimen. The torques needed for the clockwise turns and for the counter-clockwise turns are measured, and their results are plotted in Fig. 15A-15C to Fig. 16D-16F. The measurement results of Fig. 15A-15C to Fig. 16D-16F reveal: in the case of the steering device having the keylock collar 907 and the steering shaft 13 of this mode of embodiment assembled therein, even in case the steering wheel 12 is repeatedly rotated, the sliding torque necessary for rotating the steering wheel 12 did not extremely drop with small fluctuations.

Especially, the last sliding torque of the sixth cycle is 100 N·m or more so that a sufficiently high sliding torque could be retained. Since the general steering wheel 12 has a diameter of about 40 cm (or a radius of 20 cm), a force exceeding 50 Kg has to be applied to the steering wheel 12 even at the sixth cycle if the torque necessary for rotating the steering wheel 12 is 100 N · m or more. An ordinary person cannot apply a high force over 50 Kg while driving the vehicle. It is, therefore, found that the steering device can keep a sufficient theft preventing performance.

At a slide starting time, moreover, the sliding torque may have a tendency to rise abruptly. In the embodiment, however, no abrupt rise occurs in the sliding torque at the slide starting time. As a result, it does not occur that the lock key 19 is broken by an excessive torque so that the function of the steering lock device is lost. Thus, the steering lock device can reliably retain the function as the theft preventing device.

Even if the interference is reduced to one half in Fig. 15A-15C and Fig. 15D-15F, and Fig. 16A-16C and Fig. 16D-16F, the sliding torque fluctuations are so small that the difference in the sizing precision does not seriously influence the magnitude of the sliding torque. Thus, the steering lock device can be easily manufactured to reduce the manufacturing cost.

In Embodiment 4, the keylock holes 71 are formed on the keylock collar 907. However, the outer circumference of the keylock collar 907 may be recessed radially inward to have a bottomed groove so that the leading end of the lock key 19 may engage with that bottomed groove to block the rotation of the steering shaft 13.

Further, the keylock collar 907 should not be limited to the square shape but may be a polygonal shape such as a triangular shape.

Moreover, the keylock holes 71 are formed at two opposed corner portions but may be formed at all corner portions or may be formed at the side portions 972.

It will be apparent to those skilled in the art that various modifications and variations can be made to the described preferred embodiments of the present invention without departing from the scope of the invention. Thus, it is intended that the present invention cover all modifications and variations of this invention consistent with the scope of the appended claims.
[FIG. 3]
A1: 30 DEGREES
[FIG. 14]
A1: 30 DEGREES
[FIGS. 15A TO 15F]
A1: FIRST MEASUREMENT
A2: MAXIMUM TORQUE
A3: TORQUE
A4: TIME (SECONDS)
A5: CLOCKWISE ROTATION
A6: COUNTER-CLOCKWISE ROTATION
A7: SECOND MEASUREMENT
A8: THIRD MEASUREMENT
A9: FOURTH MEASUREMENT
A10: FIFTH MEASUREMENT
A11: SIXTH MEASUREMENT
[FIGS. 16A TO 16F]
A1: FIRST MEASUREMENT
A2: MAXIMUM TORQUE
A3: TORQUE
A4: TIME (SECONDS)
A5: CLOCKWISE ROTATION
A6: COUNTER-CLOCKWISE ROTATION
A7: SECOND MEASUREMENT
A8: THIRD MEASUREMENT
A9: FOURTH MEASUREMENT
A10: FIFTH MEASUREMENT
A11: SIXTH MEASUREMENT

## Claims

1. A steering device comprising:
a steering shaft (13) borne rotatably in a column (11) and being capable of mounting a steering wheel (12) on a body back side;
a keylock collar (4) of a hollow cylinder shape press-fitted on an outer circumference (13A) of the steering shaft (13) and having a polygonal inner circumference (43) formed of straight or curved sides;
either at least one ridge (47) or at least one bottomed groove formed at an outer circumference (46) of the keylock collar (4), the ridge (47) being protruded radially outward from the outer circumference (46) of the keylock collar (4), the bottomed groove being recessed radially inward from the outer circumference (46) of the keylock collar (4); and
a lock key (19) disposed in the column (11) and having its leading end portion made engageable with the ridge (47) or the bottomed groove by operating an ignition key;
**characterized in**
**that** said inner circumference (43) and said outer circumference (46) of said keylock collar (4) have a quadrangle form, wherein said quadrangle outer circumference (46) is formed at the same axial position as that of said quadrangle inner circumference (43) and is formed in shape similar to that of said quadrangle inner circumference (43);
**that** said ridge (47) or bottomed groove (46) is formed at a circumferentially central position at each side (461) of said quadrangle outer circumference (46); and
**that** the ridge (47) or bottomed groove is formed in the same number as that of sides of the quadrangle inner circumference (43).

2. The steering device as set forth in claim 1, **characterized in that** the quadrangle inner circumference (43) of the keylock collar (4) is chamfered at its one or two ends.

## Patentansprüche

1. Lenkvorrichtung, umfassend:
eine Lenkwelle (13), die drehbar in einer Säule (11) getragen wird und in der Lage ist,
ein Lenkrad (12) an einer Körperhinterseite zu montieren;
einen hohlzylinderförmigen Schlüsselsperrkragen (4) mit Presspassung an einem Außenumfang (13A) der Lenkwelle (13) und mit einem von geraden oder gekrümmten Seiten gebildeten polygonalen Innenumfang (43);
entweder wenigstens einen Steg (47) oder wenigstens eine mit Boden versehene Nut mit Ausbildung an einem Außenumfang (46) des Schlüsselsperrkragens (4), wobei der Steg (47) von dem Außenumfang (46) des Schlüsselsperrkragens (4) radial nach außen vorsteht, die mit Boden versehene Nut von dem Außenumfang (46) des Schlüsselsperrkragens (4) radial nach innen zurückgenommen ist; und
einen Sperrschlüssel (19), der in der Säule (11) angeordnet ist und einen führenden Endabschnitt aufweist, der mit dem Steg (47) oder der mit Boden versehenen Nut durch Betätigen eines Zündschlüssels in Eingriff gebracht werden kann;
**dadurch gekennzeichnet, dass**
der Innenumfang (43) und der Außenumfang (46) des Schlüsselsperrkragens (4) eine Vierecksform aufweist, wobei der Vierecksaußenumfang (46) an derselben axialen Position wie diejenige des Vierecksinnenumfanges (43) ausgebildet ist und in einer Form ähnlich zu derjenigen des Vierecksinnenumfanges (43) ausgebildet ist;
der Steg (47) oder die mit Boden versehene Nut (46) an einer umfänglich zentralen Position an jeder Seite (461) des Vierecksaußenumfanges (46) ausgebildet ist; und
der Steg (47) oder die mit Boden versehene Nut in derselben Anzahl wie diejenige der Seiten des Vierecksinnenumfanges (43) ausgebildet ist.

2. Lenkvorrichtung nach Anspruch 1, **dadurch gekennzeichnet, dass** der Vierecksinnenumfang (43) des Schlüsselsperrkragens (4) an einem oder zweien seiner Enden verjüngt ist.

## Revendications

1. Dispositif de direction comportant :
un arbre de direction (13) supporté de façon rotative dans une colonne (11) et qui est capable de monter un volant (12) sur un côté arrière de corps ;
un collier de verrou (4) en forme de cylindre creux ajusté de manière serré sur une circonférence extérieure (13A) de l'arbre de direction (13) et ayant une circonférence intérieure polygonale (43) constituée de côtés droits ou courbes ;
au moins une arête (47) ou au moins une rainure pourvue d'un fond formée au niveau d'une circonférence extérieure (46) du collier de verrou (4), l'arête (47) étant amenée à dépasser radialement à l'extérieur de la circonférence extérieure (46) du collier de verrou (4), la rainure pourvue d'un fond étant renfoncée radialement vers l'intérieur par rapport à la circonférence extérieure (46) du collier de verrou (4) ; et
un verrou (19) disposé dans la colonne (11) et en ayant sa partie d'extrémité avant qui peut être engagée avec l'arête (47) ou la rainure pourvue d'un fond en actionnant une clé de contact ;
**caractérisé en ce que** ladite circonférence intérieure (43) et ladite circonférence extérieure (46) dudit collier de verrou (4) ont une forme quadrangulaire, ladite circonférence extérieure quadrangulaire (46) étant formée dans la même position axiale que celle de ladite circonférence intérieure quadrangulaire (43) et étant formée avec une forme semblable à celle de ladite circonférence intérieure quadrangulaire (43) ;
**en ce que** ladite arête (47) ou rainure pourvue d'un fond (46) est formée dans une position circonférentiellement centrale au niveau de chaque côté (461) de ladite circonférence extérieure quadrangulaire (46) ; et
**en ce que** l'arête (47) ou la rainure pourvue d'un fond est formée dans le même nombre que les côtés de la circonférence intérieure quadrangulaire (43).

2. Dispositif de direction selon la revendication 1, **caractérisé en ce que** la circonférence intérieure quadrangulaire (43) du collier de verrou (4) est chanfreinée au niveau d'une ou de ses deux extrémités.
